# EUROPEAN PATENT APPLICATION

(11) **EP 0 868 848 A1**
(43) Date of publication of application: **07.10.1998**
(21) Application number: 97105467.1
(22) Date of filing: 02.04.1997
(51) Int. Cl.: A01K 85/00, A01K 85/16

(54) **Lure**

(71) Applicant: P & N Pink Co., Ltd., Abeno-ku, Osaka (JP)
(72) Inventor: Takasu, Toshiharu, Habikino-shi, Osaka (JP); Nakanishi, Keisuke, Shijonawate-shi, Osaka (JP)
(74) Representative: Glawe, Delfs, Moll & Partner

(57) **Abstract**

A lure which can move smoothly and naturally in the water and which is less likely to catch non-fish objects. A wire (12) is mounted to the underside of the lure body (10) to extend longitudinally of the lure body (10). The wire (12) is passed through an eye (11A) of a double hook (11) so that the hook can slide longitudinally of the lure body (10) along the wire (12).

## Description

### BACKGROUND OF THE INVENTION

This invention relates to lure, especially a plug type or a jig type lure.

Fig. 6 shows a conventional lure. It comprises a lure body 1 having the shape of a small fish, and hooks (treble hooks) 2 coupled to the body 1 by means of links 3. The lure also has a link 4 to which a fishline is connected, and a lip 5.

The lure is designed for such a balance that the body 1 can move smoothly and naturally like a real fish in the water. But since the hooks 2 are pivotally mounted at fixed points, the lure body 1 tends to lose its balance in the water due to water resistance that acts on the hooks 2. It was thus difficult to maintain smooth, natural movement of the body 1 in the water.

Also, the treble hooks 2 tend to catch objects other than fish.

When a fish is hooked, the lure body 1 tends to swing like a pendulum, increasing the chance for the fish to escape. This is also because the hooks are mounted at fixed points.

An object of this invention is to provide a lure which can move smoothly and naturally in the water, which is less likely to catch non-fish objects, and which is less likely to lose a hooked fish.

### SUMMARY OF THE INVENTION

According to this invention, a lure comprising a lure body and a hook slidably mounted to the bottom of the lure body.

Preferable form of the hook is a double hook, because the double hook is less likely to catch non-fish objects.

Other features and objects of the present invention will become apparent from the following description made with reference to the accompanying drawings, in which:

### BRIEF DESCRIPTION OF THE DRAWINGS

Fig. 1 is a side view of one embodiment of the lure according to this invention;
Fig. 2 is a side view of another embodiment;
Fig. 3 is a side view of still another embodiment;
Fig. 4 is a side view of yet another embodiment of the lure;
Fig. 5 is a front view of a further embodiment of the lure; and
Fig. 6 is a side view of a conventional lure.

### DETAILED DESCRIPTION OF THE PREFERRED EMBODIMENT

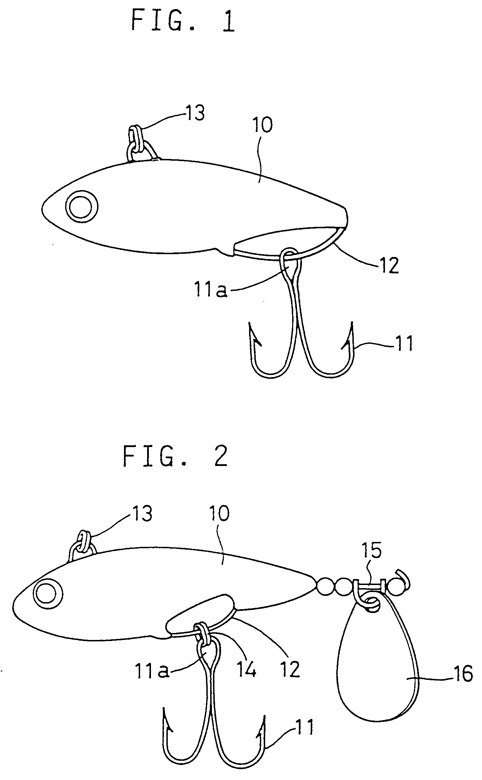

Embodiments of this invention are described with reference to Figs. 1-4.

Referring first to Fig. 1, the lure according to this invention comprises a lure body 10 having the shape of a small fish, and a double hook 11 mounted to the bottom of the body 10 so as to be slidable longitudinally of the body 10 by means of a slide means. The slide means comprises a wire 12 having both ends thereof fixed to the bottom of the body 1 to extend longitudinally of the body 10, and an eye 11a of the double hook 11 through which the wire 12 extend. On the top of the lure body 10 is provided a link 13 to which is connected a fishline.

As shown in Fig. 2, the wire 12 may be passed through a link 14 coupled to the eye 11a of the double hook 11.

Also, a spinner 16 may be mounted on a rod 15 provided at the rear end of the lure body 10.

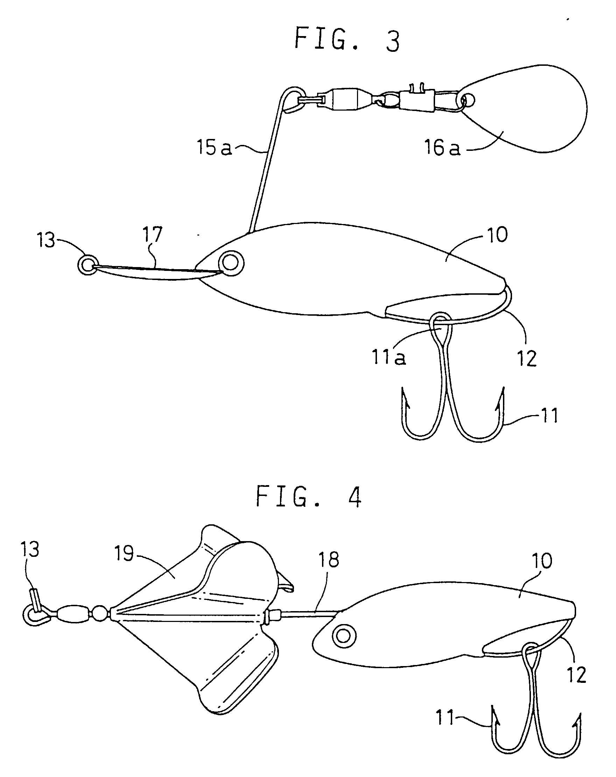

In the embodiment of Fig. 3, a spinner 16a is connected to a rod 15a extending upward from the top of the lure body 10. The link 13 is mounted on the tip of a lip 17 fixed to the front end of the lure body 10.

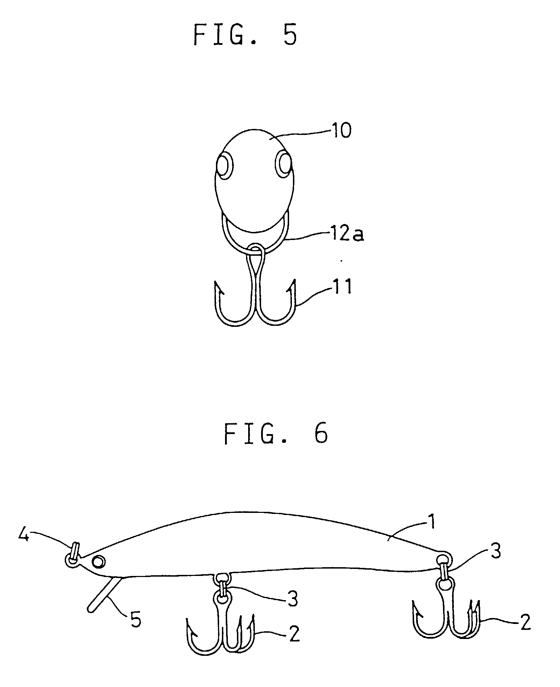

In the embodiment shown in Fig. 4, a vane 19 is mounted on a rod 18 fixed to the head of the lure body 10 so as to be rotatable in the direction of arrow. The link 13 to be connected to a fishline is mounted on the tip of the rod 18.

In the embodiment of Fig. 5, the double hook 11 is slidably mounted on a wire 12a hung from the lure body 10 so as to extend transversely of the lure body 10.

In use, the lure is put in the water with a fishline connected to the link 13 to let the lure move freely in the water. As the lure body 10 moves back and forth in the water, the hook 11 slides along the wire 12, reducing water resistance that acts on the hook. Thus, the lure body 10 can move smoothly and naturally like a real fish, so that the lure can lure and catch fish efficiently.

The lure according to this invention may be in the form of a jig spinner, crank bait, buzz bait or vibration plug.

According to this invention, as the lure body moves in the water, the hook slides relative to the lure body, thus reducing water resistance. The lure body can thus move smoothly and naturally like a real fish, so that the lure can catch fish efficiently.

When a fish is hooked, the slide mechanism allows the hook to slide relative to the lure body, thus reducing the swinging motion of the lure body. The possibility of losing the hooked fish thus decreases.

The double hook used in this invention encounters less water resistance and is less likely to catch non-fish objects than conventional treble hooks.

## Claims

1. A lure comprising a lure body and a hook slidably mounted to the bottom of said lure body.

2. A lure as claimed in claim 1 wherein said hook is a double hook.
